# EUROPEAN PATENT SPECIFICATION

(11) **EP 2 231 907 B1**
(45) Date of publication and mention of the grant of the patent: **13.04.2016**
(21) Application number: 08861011.8
(22) Date of filing: 11.12.2008
(51) Int. Cl.: D01F 8/04, D01F 8/00, D01F 8/12

(54) **MULTI-COMPONENT FIBERS**
MEHRKOMPONENTIGE FASERN
FIBRES À MULTICOMPOSANTS

(30) Priority: 14.12.2007 US 14004 P
(43) Date of publication of application: 29.09.2010
(73) Proprietor: 3M Innovative Properties Company, Saint Paul, MN 55133-3427 (US)
(72) Inventor: CARLSON, James G., Saint Paul, Minnesota 55133-3427 (US); BERRIGAN, Michael R., Saint Paul, Minnesota 55133-3427 (US); CRANDALL, Michael D., Saint Paul, Minnesota 55133-3427 (US); KADOMA, Ignatius A., Saint Paul, Minnesota 55133-3427 (US); WU, Yong K., Saint Paul, Minnesota 55133-3427 (US); ZILLIG, Daniel J., Saint Paul, Minnesota 55133-3427 (US)
(74) Representative: Herzog, Fiesser & Partner Patentanwälte PartG mbB
(86) International application number: PCT/US2008/086313
(87) International publication number: WO 2009/079310

(56) References cited:
- EP-A1- 1 577 426
- EP-A1- 1 589 137
- WO-A1-2007/066599
- JP-A- 10 001 875
- JP-A- 2006 233 358
- US-A- 5 798 305
- US-A- 5 811 186
- US-A- 5 972 463
- US-A1- 2004 092 191
- US-B1- 6 391 443
- BROSTOW W; LOBLAND H E H: "Brittleness of materials: implications for composites and a relation to impact strength", JOURNAL OF MATERIALS SCIENCE, vol. 45, no. 1, 8 October 2009 (2009-10-08), pages 242-250, XP002615932, DOI: 10.1007/s10853-009-3926-5
- VILLANUEVA M P; CABEDO L; LAGARON J M; GIMENEZ E: "Comparative Study of Nanocomposites of Polyolefin Compatibilizers Containing Kaolinite and Montmorillonite Organoclays", JOURNAL OF APPLIED POLYMER SCIENCE, vol. 115, no. 3, 7 October 2009 (2009-10-07), pages 1325-1335, XP002615933, DOI: 10.1002/app.30278

## Description

### Background

Various multi-component fibers are known. Useful properties of some of these fibers include fiber bonding, wherein, for example, a low melting or softening sheath covers a higher melting core. The sheath, when melted or softened serves as a bonding agent for the core.

In another aspect, oil and gas field operators have a need for controlling proppant flowback. Several different approaches have been used to solve this problem, including the use of resin coated (e.g., the coating may be thermosetting resins, such as epoxies and phenolics, and thermoplastic elastomers, such as acrylic resins) proppants. The coated proppants are expected to adhere to each other at the down hole to form an integrated proppant block in down hole.

Relatively short fibers (see, e.g., U.S, Pat. Nos. 5,330,005 (Card et al.), 5,501,275 (Card et al.), and 6,172,011 (Card et al.)) have been applied to flowback control. A disadvantage of this approach is its efficiency in controlling flowback. Other approaches have been proposed, such as inclusion of short fibers in the resin coated layers on the proppant, and the modification of proppant geometry including the aspect ratio and particle size distribution.

There is a need for additional flowback control options.

### Summary

The present disclosure provides a multi-component fiber as defined in claim 1.

In particular, the present disclosure describes a multi-component fiber comprising at least first and second polymers, wherein the first polymer has a softening temperature up to 150°C (in some embodiments, up to 140°C, 130°C, 120°C, 110°C, 100°C, 90°C or even up to 80°C), wherein the second polymer has a melting point of at least 130°C (in some embodiments, at least 140°C, 150°C, 160°C, 170°C, 175°C, 180°C, 190°C, 200°C, 210°C, 220°C, 225°C, 230°C, 240°C, or even at least 250°C), wherein the difference between the softening point of the first polymer and the melting point of the second polymer is at least 10°C (in some embodiments, at least 15°C , 20°C, 25°C, 50°C, 75°C, 100°C, 125°C, 150°C, or even at least 175°C), wherein the first polymer is at least one of an ethylene(meth)acrylic acid copolymer, ethylene(meth)acrylic acid ionomer, polyamide, polyvinylidene fluoride, crosslinked polyethylene, crosslinked polypropylene, moisture cured polyurethane, epoxies, crosslinked acrylates, cross-linked silicone or thermoplastic polyurethane, wherein the second polymer is at least one of a nylon, poly(cyclohexanedimethanol terephthalate), poly(ethylene naphthalate), poly(4-methyl 1-pentene), poly(phenylene sulfide), polyoxymethylene, or polysulfone, wherein at least one of the first or second polymer has an elastic modulus of less than 3 x 10⁵ N/m² at 1 Hz at at least 50°C (in some embodiments, up to at least 60°C, 70°C, 75°C, or even up to 80°C), wherein the fiber has a length in a range from 2 to 10 millimeters, and an average diameter up to 100 micrometers (in some embodiments, up to 90, 85, 80, 75, 70, 65, 60, 55, 50, 45, 40, 35, 30, 25, 20, 15, or even up to 10 micrometers), and wherein the fiber is non-fusing up to at least 110°C (in some embodiments, up to at least 125°C, 150°C, or even up to at least 160°C). In some embodiments, the second polymer has an elastic modulus that is higher (in some embodiments, at least 10, 25, 50, 75, 100, 500, 1000, 5000, or even, at least 10,000 times) than the elastic modulus of the first polymer. In some embodiments, at least one of the first or second polymer is crosslinked.

Non-fusing fibers are known in the art. "Non-fusing" multi-component fibers are fibers which can autogenously bond (i.e., bond without the addition of pressure between fibers) without significant loss of the multi-component architecture. The spatial relationship between the first polymer and the second polymer is retained in non-fusing multi-component fibers. Typically multi-component fibers undergo so much flow of the first polymer during autogenous bonding that the multi-component structure is lost as the first polymer becomes concentrated at fiber junctions and the second polymer is exposed elsewhere. This is undesirable for maintaining a tacky network of fibers since the second polymer is typically non-tacky. In non-fusing fibers heat causes little or no flow of the first polymer so that the fiber tack is retained along the majority of the multicomponent fibers. To test the non-fusing nature of the fibers, a specific test is used (see "Non-fusing Fiber Test" in the working examples section).

In some embodiments, multi-component fibers described herein further comprise at least one additional (e.g. a third, fourth, fifth, etc.) polymer each independently having a softening temperature up to 150°C (in some embodiments, up to 140°C, 130°C, 125°C, 120°C, 110°C, 100°C, 90°C, or even up to 80°C) and/or a melting point of at least 150°C (in some embodiments, at least 160°C, 170°C, 175°C, 180°C, 190°C, 200°C, 210°C, 220°C, 225°C, 230°C, 240°C, or even at least 250°C). In some embodiments, each additional (e.g. a third, fourth, fifth, etc.) polymer is independently at least one of an ethylene(meth)acrylic acid copolymer, ethylene(meth)acrylic acid ionomer, polyamide, polyvinylidene fluoride, crosslinked polyethylene, crosslinked polypropylene, moisture cured polyurethane, epoxy, crosslinked acrylate, cross-linked silicone, thermoplastic polyurethanes, nylon, poly(cyclohexanedimethanol terephthalate), poly(ethylene naphthalate), poly(4-methyl 1-pentene), poly (phenylene sulfide), or polyoxymethylene, polysulfone.

Multi-component fibers described herein are useful, for example, for flowback control in oil and gas wellbores and reservoirs. The fibers are useful for maintaining proppant distribution during injection and placement in wellbores, as well as providing a more uniform proppant distribution in the fracture(s). The fibers are also useful for sand beds or other packed bed for water filtration to prevent channeling.

### Brief Description Of the Drawings

For a more complete understanding of the features and advantages of the present invention, reference is now made to the detailed description of the invention along with the accompanying figures and in which:
FIGS. 1A-1D are schematic cross-sections of four exemplary multi-component fibers described herein.
FIGS. 2A-D are elastic modulus vs. temperature plots of certain ethylene-methacrylic acid ionomers.

### Detailed Description

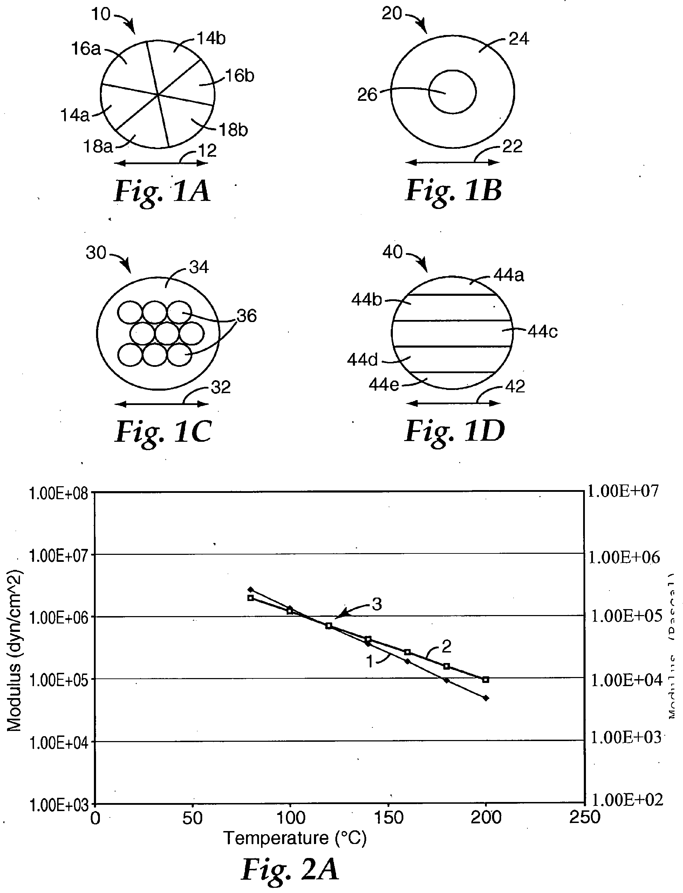

Exemplary multi-component fiber configurations are illustrated in FIGS. 1A-1D. Referring to FIG. 1A, pie-wedge fiber 10 has a circular cross-section 12, and first polymer 14a and 14b, second polymer 16a and 16b, and third and fourth polymer 18a and 18b. In FIG. 1B, multi-component fiber 20 has circular cross-section 22 and first polymer sheath 24, and second polymer core 26. FIG. 1C shows multi-component fiber 40 having core-sheath structure with a first polymer sheath 44 and plurality of second polymer cores 46. FIG. 1D shows multi-component fiber 30 having circular cross-section 32, with five layered regions 34a, 36b, 34c, 36d, 34e, which comprise alternatively at least the first and second polymers described herein.

Typically, the dimensions of the fibers used together for a particular application, and components making up the fibers are generally about the same, although use of fibers with even significant differences in compositions and/or dimensions may also be useful. In some applications, it may be desirable to use two or more different groups of fibers (e.g., at least one different polymer, one or more additional polymers, different average lengths, or otherwise distinguishable constructions), where one group offers a certain advantage(s) in one aspect, and other group a certain advantage(s) in another aspect.

Multi-component fibers can generally be made using techniques known in the art such as multi-component (e.g., bi-component) fiber spinning (see, e.g., U.S. Pat. Nos. 4,406,850 (Hills), 5,458,472 (Hagen), 5,411,693 (Wust), 5,618,479 (Lijten), and 5,989,004 (Cook)).

Suitable polymeric materials for making the fibers are known in the art. Exemplary first polymers having a softening temperature up to 150°C include at least one of an ethylene(meth)acrylic acid copolymer, ethylene(meth)acrylic acid ionomer, polyamide, polyvinylidene fluoride (PVDF) (e.g., available under the trade designation "SOLEF TA1006" from Solvay Engineered Polymers GmbH, Heidelberg, Germany), cyclic olefin (e.g., available under the trade designation "TOPAS 6017" from Ticona North America), tetrafluoroethylene/hexafluoropropylene/vinylidenefluoride (THV) copolymer, (e.g. those available under the trade designation "THV-220A" from Dyneon, Oakdale, MN), crosslinked polyethylene, crosslinked polypropylene, moisture cured polyurethane (e.g., available under the trade designation "TIVOMELT 9617/11," "TIVOMELT 9628," and "TIVOMELT 9635/12" from Tivoli, Hamburg, Germany; "PURMELT QR116" and "PURMELT QR3310-21" from Henkel Consumer Adhesives, Inc., Avon, OH; and "JET WELD TS-230" from 3M Company, St. Paul, MN), epoxy (curable epoxy resins are available, for example, under the trade designations "SCOTCHCAST 5555" and "SCOTCHCAST 5400" from 3M Company), crosslinking acrylate (thermally crosslinked acrylic hotmelts reported, for example, in U.S. Pat. No. 6,875,506 (Husemann, et al.), and crosslinking silicone (available, for example, under the trade designation "MASTERSIL 800" from Master Bond, Inc., Hackensack, NJ), or thermoplastic polyurethanes. Such polymers can be made by techniques known in the art and/or are commercially available. Further, for example, partially neutralized ethylenemethacrylic acid co-polymer is commercially available, for example, from E. I. duPont de Nemours & Company, Wilmington, DE, under the trade designations "SURLYN 8660," "SURLYN 1702," "SURLYN 1857," and "SURLYN 9520"). Polyethylene is commercially available, for example, from Dow Chemical Company, Midland, MI, under the trade designation "DOWLEX 2517"). Low density polyethylene is commercially available, for example, from ExxonMobil, Irving, TX, under the trade designation "LD 200.48"). Exemplary second polymers having a melting point of at least 130°C include at least one of a nylon, poly(cyclohexanedimethanol terephthalate), poly(ethylene naphthalate), poly(4-methyl 1-pentene), poly(phenylene sulfide), polyoxymethylene, or polysulfone. Such polymers can be made by techniques known in the art and/or are commercially available. For example, nylon is commercially available, for example, from BASF, North America, Florham Park, NJ, under the trade designation "ULTRAMID B27 E01"). Poly(phenylene sulfide) is commercially available, for example, from Ticona Engineering Polymers, Florence, KY, under the trade designation "FORTRON 203"). Polyoxymethylene is commercially available, for example, under the trade designation "CELCON" (e.g., Grade FG40U01) from Ticona Engineering Polymers,

It is within the scope of the present disclosure for the core-sheath configurations to have multiple sheaths. Each component of the fiber, including additional polymers, can be selected to provide a desirable performance characteristic(s). For example, if the sheath polymer flows at too low of a temperature it can be increased by adding a second polymer with a higher flow temperature. Various configurations have certain advantages depending on the application intended. Further, for example, the core-sheath and the islands in the sea configuration (see, e.g., FIG. 1C) have 100% of the surface one material, whereas the segmented pie wedge (see, e.g., FIG. 1A) and the layered (see, e.g., FIG. 1D) configurations have less than 100% of the surface one material.

Optionally, multi-component fibers described herein may further comprise other components (e.g., additives and/or coatings) to impart desirable properties such as handling, processability, stability, and dispersability. Exemplary additives and coating materials include antioxidants, colorants, fillers, and surface applied materials to improve handling such as waxes, surfactants, polymeric dispersing agents, and talcs.

Surfactants can be used to improve the dispersibility of the fibers. Useful surfactants (also known as emulsifiers) include anionic, cationic, or nonionic surfactants and include anionic surfactants, such as alkylarylether sulfates and sulfonates such as sodium alkylarylether sulfate (e.g., nonylphenol ethoxylates such as those known under the trade designation "TRITON X200", available from Rohm and Haas, Philadelphia, PA), alkylarylpolyether sulfates and sulfonates (e.g., alkylarylpoly(ethylene oxide) sulfates and sulfonates, preferably those having up to about 4 ethyleneoxy repeat units), and alkyl sulfates and sulfonates such as sodium lauryl sulfate, ammonium lauryl sulfate, triethanolamine lauryl sulfate, and sodium hexadecyl sulfate, alkyl ether sulfates and sulfonates (e.g., ammonium lauryl ether sulfate, and alkylpolyether sulfate and sulfonates (e.g., alkyl poly(ethylene oxide) sulfates and sulfonates, preferably those having up to about 4 ethyleneoxy units). Alkyl sulfates, alkyl ether sulfates, and alkylarylether sulfates are also suitable. Additional anionic surfactants can include alkylaryl sulfates and sulfonates (e.g., sodium dodecylbenzene sulfate and sodium dodecylbenzene sulfonate), sodium and ammonium salts of alkyl sulfates (e.g., sodium lauryl sulfate, and ammonium lauryl sulfate); nonionic surfactants (e.g., ethoxylated oleoyl alcohol and polyoxyethylene octylphenyl ether); and cationic surfactants (e.g., a mixture of alkyl dimethylbenzyl ammonium chlorides, wherein the alkyl chain contains from 10 to 18 carbon atoms). Amphoteric surfactants are also useful, and include sulfobetaines, N-alkylaminopropionic acids, and N-alkylbetaines.

Polymeric dispersing agents may also be used, for example, to promote the dispersion of the fibers in the chosen medium, and at the application conditions (e.g., pH, and temperature). Exemplary polymeric stabilizers include salts of polyacrylic acids of greater than 5000 molecular weight average (e.g., ammonium, sodium, lithium, and potassium salts), carboxy modified polyacrylamides (available, for example, under the trade designation "CYANAMER A-370" from Cytec Industries, West paterson, NJ), copolymers of acrylic acid and dimethylaminoethylmethacrylate, polymeric quaternary amines (e.g., a quaternized polyvinyl-pyrollidone copolymer (available, for example, under the trade designation "GAFQUAT 755" from ISP Corp., Wayne, NJ) and a quaternized amine substituted cellulosic (available, for example, under the trade designation "JR-400" from Dow Chemical Company, Midland, MI), cellulosics, carboxy-modified cellulosics (e.g., sodium carboxy methycellulose (available, for example, under the trade designation ""NATROSOL CMC Type 7L" from Hercules, Wilmington, DE), and polyvinyl alcohols.

Examples of antioxidants include hindered phenols (available, for example, under the trade designation "IRGANOX" from Ciba Specialty Chemical, Basel, Switzerland). Examples of colorants include pigments and dyes. Examples of fillers include carbon black, clays, and silica. Example of surface treatments include talc, erucamide, and gums.

Multi-component fibers described herein are useful, for example, for flowback control in wellbores and reservoirs. The fibers are also useful, and advantageous, for maintaining proppant distribution during injection and placement in wellbores, as well as providing a more uniform proppant distribution in the fracture(s).

The present disclosure also describes a method of contacting a subterranean formation with a fluid composition, the method comprising injecting the fluid composition into a well-bore, the well-bore intersecting the subterranean formation, the fluid composition comprising a carrier fluid and multi-component fiber described herein. Exemplary carrier fluids are well-known in the art and include water-based and/or oilbased carrier fluids. In another embodiment, the multi-component fibers can be supplied into the well-bore as dry fibers.

The following examples are provided to illustrate some embodiments of the invention and are not intended to limit the scope of the claims. All percentages are by weight unless otherwise noted.

### Hydrolytic Stability Test

0.5 gram of fibers was placed into a 12 ml vial containing 10 grams of deionized water. The vial was nitrogen sparged, sealed with a rubber septum and placed in an autoclave at 145°C for 4 hours. The fibers were subjected to optical microscopic examination at 100x magnification. They were deemed to have failed the test if either at least 50 percent by volume of the fibers or at least 50 percent by volume of one of the first or second polymer comprising the fiber dissolved and/or disintegrated.

### Hydrocarbon Stability Test

0.5 gram of fibers was placed into 25 ml of kerosene (reagent grade, boiling point 175-320°C, obtained from Sigma-Aldrich, Milwaukee, WI), and heated to 145°C for 4 hours under nitrogen. After 24 hours, the kerosene was cooled, and the materials were examined using optical microscopy at 100x magnification. They were deemed to have failed the test if either at least 50 percent by volume of the fibers or at least 50 percent by volume of one of the first or second polymer comprising the fiber dissolved and/or disintegrated.

### Softening Temperature Test

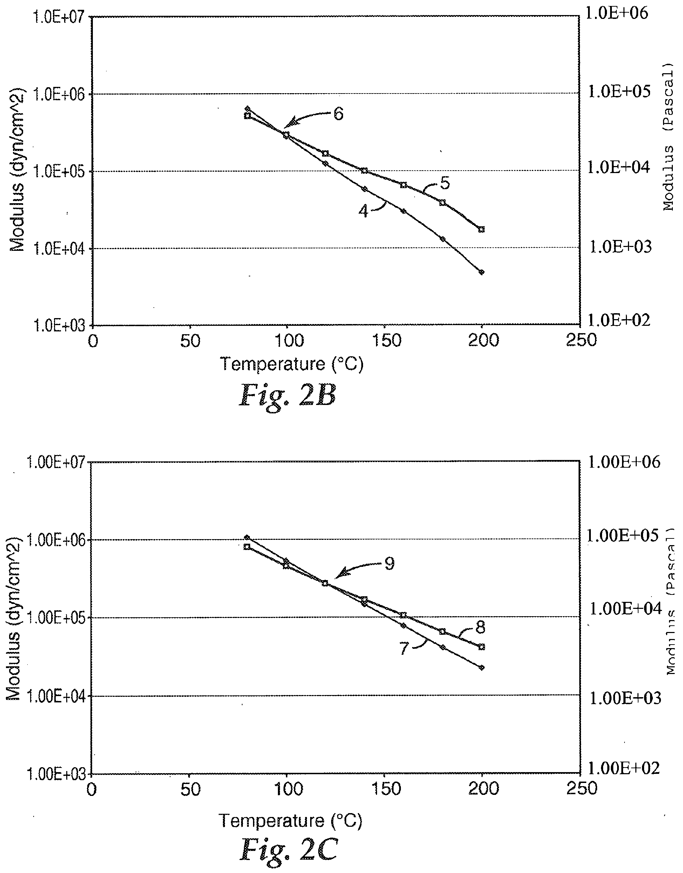

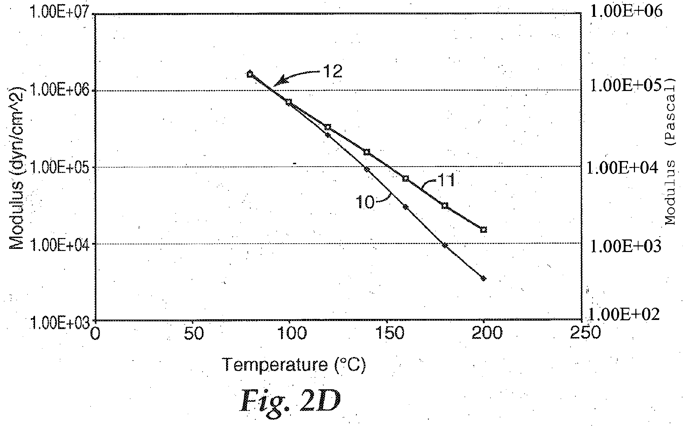

Data to determine softening points of the first polymers is illustrated in FIGS. 2A-2D. This data was generated using a stress-controlled rheometer (Model AR2000 manufactured by TA Instruments, New Castle, DE). In the test procedure, resin particles of the polymer were placed between two 20 mm parallel plates of the rheometer and pressed to a gap of 2 mm ensuring complete coverage of the plates. A sinusoidal frequency of 1 Hz at 1% strain was then applied over a temperature range of 80-200°C. The resistance force of the molten resin to the sinusoidal strain was proportional to its modulus which was recorded by a transducer and displayed in graphical format. Using rheometeric software, the modulus is mathematically split into two parts: one part that was in phase with the applied strain (elastic modulus -- solid-like behavior) (for ethylene-methacrylic acid ionomers obtained from the E. I. duPont de Nemours & Company, Wilmington, DE under the trade designations "SURLYN 9520," "SURLYN 8660," "SURLYN 1857," and "SURLYN 1702," respectively, see lines 1, 4, 7, and 10, respectively), and another part that was out of phase with the applied strain (viscous modulus -- liquid-like behavior) (for ethylene-methacrylic acid ionomers "SURLYN 9520," "SURLYN 8660," "SURLYN 1857," and "SURLYN 1702") see lines 2, 5, 8, and 11, respectively). The temperature at which the two moduli were identical (cross-over temperature) was defined as a softening point, as it represents the temperature above which the resin began to behave predominantly like a liquid (see points 3, 6, 9, and 12). The softening points for the selected ethylene-methacrylic acid ionomers ("SURLYN 9520,", "SURLYN 8660," "SURLYN 1857," and "SURLYN 1702") were determined to be 116°C, 96°C, 121 °C, and 92°C, respectively.

### Examples 1-5

The core material for the Examples 1-4 fibers was nylon 6 (obtained under the trade designation "ULTRAMID B27 B01" from BASF North America, Florham Park, NJ). The core material for Example 5 was nylon (obtained under the trade designation "ZYTEL RESIN 101NC010" from the E. I. duPont de Nemours & Company). The sheath material for all was a blend of 80% by weight of an ethylene-methacrylic acid ionomer (obtained from the E. I. duPont de Nemours & Company under the trade designation "SURLYN 1702") and 20% by weight of a nylon 6 ("ULTRAMID B27 B01").

The sheath for Example 1 was a mixture of 94% by weight of an ethylene-methacrylic acid ionomer ("SURLYN 8660") and 6% by weight of a polyethylene (obtained under the trade designation "DOWLEX 2503" (but no longer available, however a similar material is available under the trade designation "2517") from Dow Chemical Company, Midland, MI).

The sheath for Example 2 was a mixture of 94% by weight of an ethylene-methacrylic acid ionomer ("SURLYN 9520") and 6% by weight of a polyethylene ("DOWLEX 2503").

The sheath for Example 3 was a mixture of 94% by weight of an acid ionomer ("SURLYN 8660") and 6% by weight of a paraffin wax (obtained from Sigma-Aldrich St. Louis, MO, and described as "76241 Fluka Paraffin wax, purum, pellets, white").

The sheath for Example 4 was 100% of an acid ionomer ("SURLYN 8660").

The sheath for Example 5 was an acid ionomer ("SURLYN 1702").

Example 1-5 sheath-core bicomponent fibers were made as described in Example 1 of U.S. Pat. No. 4,406,850 (Hills), except (a) the die was heated to the temperature listed in Table 1, below; (b) the extrusion die had sixteen orifices laid out as two rows of eight holes, wherein the distance between holes was 12.7 mm (0.50 inch) with square pitch, and the die had a transverse length of 152.4 mm (6.0 inches); (c) the hole diameter was 1.02 mm (0.040 inch) and the length to diameter ratio was 4.0; (d) the relative extrusion rates in grams per hole per minute of the two streams are reported in Table 1;. (e) the fibers were conveyed downwards a distance reported in Table 1 to a quench bath of water held at 25°C, wherein the fibers were immersed in the water for a minimum of 0.3 seconds before being dried by compressed air and wound on a core;. and (f) the spinning speed was adjusted by a pull roll to rates reported in Table 1. The fibers were then chopped to length and the fibers were tested for various properties.

**Table 1**

| Example | Core Rate, grams per hole per minute | Sheath Rate, grams per hole per minute | Die Temperature, °C | Pull Roll Speed, Meters/minute | Distance to Quench, centimeters |
|---|---|---|---|---|---|
| 1 | 0.25 | 0.24 | 240 | 250 | 36 |
| 2 | 0.25 | 0.50 | 250 | 46 | 38 |
| 3 | 0.25 | 0.24 | 240 | 250 | 23 |
| 4 | 0.25 | 0.24 | 240 | 250 | 58 |
| 5 | 0.25 | 0.26 | 270 | 250 | 36 |

Samples of each of the Example 1-5 fibers were chopped to a length of about 6 cm and tested using each of the Hydrocarbon Stability Test and the Hydrolytic Stability Test. All passed both tests.

### Non-Fusing Fiber Test

The fibers were cut to 6 mm lengths separated, and formed into a flat tuft of interlocking fibers. Further, the diameter of a portion of the cut and separated fibers were measured. The diameter of 20 fibers were measured, and the median recorded.

Tufts of the fibers were heated in a conventional vented convection oven for 5 minutes at the selected test temperature. Twenty individual separate fibers were selected and fiber section diameters measured and the median recorded. The fibers were designated as "non-fusing" if there was less than 20% change in fiber diameter after the heating.

The Example 5 fiber was evaluated using the Non-Fusing Fiber Test at a test temperature of 150°C. The diameter of the fiber changed less than 10% after being subjected to the test.

### Comparative

A co-PET/PET polyester binder fiber (obtained from KoSa, Salisbury, NC under the trade designation "KOSA T-255"; a 3 denier sheath-core binder fiber with 50% by weight core and 50% by weight sheath) was evaluated using the Non-Fusing Fiber Test at a test temperature of 120°C. The diameter of the fiber changed from 20 micrometers before heating to 14 micrometers as a result of the heating.

### Examples 6-9

The Example 6-9 sheath-core bicomponent fibers were made as described in Example 1 of U.S. Pat. No. 4,406,850 (Hills), except (a) the die was heated to the temperature listed in Table 2, below; (b) the extrusion die had eighteen rows of orifices where each row had 36 orifices, making a total of 648 orifices; the die had a transverse length of 264.2 mm (10.4 inches); (c) the hole diameter was 1.02 mm (0.040 inch) and the length to diameter ratio was 6.0; (d) the polymer flow rate was 1.0 grams/hole/minute; (e) the fibers were quenched by 15°C air emitted at 1.42 standard cubic meters per minute (100 kilopascals pressure and 0°C) on either side of the die extending downward about 64 centimeters; (f) the spinning speed was adjusted to produce the filament average diameter reported in Table 2, below; and (g) the rates of polymer flow were adjusted to produce a fiber with 50% mass flow of both sheath and core.

**Table 2**

| Example | Core Temperature, °C | Sheath Temperature, °C | Quench Temperature, °C | Fiber Diameter, micrometers | Die flow rate total, g/hole/minute) | Die Temperature, °C |
|---|---|---|---|---|---|---|
| 6 | 300 | 270 | 15 | 18 | 1.6 | 300 |
| 7 | 270 | 270 | 15 | 21 | 1.0 | 270 |
| 8 | 270 | 270 | 15 | 20 | 1.0 | 270 |
| 9 | 270 | 270 | 15 | 17 | 1.0 | 270 |

Samples of each of the Example 6-9 fibers were chopped to a length of about 6 cm and tested using each of the Hydrocarbon Stability Test and the Hydrolytic Stability Test. All passed both tests.

Further, for Example 6, the core was made from a polyphenylene sulfide (PPS) resin (obtained Ticona North America, Florence, KY under the trade designation "FORTRON 0309C"; and the sheath was made from an ethylene- methacrylic acid ionomer ("SURLYN 1702"). For Example 7, the core was made from a nylon 6 ("ULTRAMID B27 E01 "); and the sheath from a blend of 80% by weight of an ethylene-methacrylic acid ionomer ("SURLYN 1702") and 20% by weight of a nylon 6 ("ULTRAMID B27 E01"). For Example 8, the core was made from a nylon 6 ("ULTRAMID B27 E01"); and the sheath material was a blend of 90% by weight of an ethylene-methacrylic acid ionomer ("SURLYN 1702") and 10% by weight of a polyvinylidenefluoride (PVDF) resin (obtained under the trade designation "SOLEF TA1006" from Solvay Engineered Polymers GmbH, Heidelberg, Germany). For Example 9, the core was made from a nylon 6 ("ULTRAMID B27 E01"); and the sheath from a blend of 90% by weight of an ethylene-methacrylic acid ionomer ("SURLYN 1702") with 10% by weight of a cyclic olefin resin (obtained under the trade designation "TOPAS 6017" from Ticona North America).

It should be understood that this invention is not intended to be unduly limited by the illustrative embodiments and examples set forth herein and that such examples and embodiments are presented by way of example only with the scope of the invention intended to be limited only by the claims set forth herein as follows.

## Claims

1. A multi-component fiber comprising at least first and second polymers,
wherein the first polymer has a softening temperature up to 150 °C,
wherein the second polymer has a melting point of at least 130 °C,
wherein the difference between the softening point of the first polymer and the melting point of the second polymer is at least 10 °C,
wherein the first polymer is at least one of ethylene(meth)acrylic acid copolymer, ethylene(meth)acrylic acid ionomer, polyamide, polyvinylidene fluoride, crosslinked polyethylene, crosslinked polypropylene, moisture cured polyurethane, epoxies, crosslinked acrylates, cross-linked silicone or thermoplastic polyurethane,
wherein the second polymer is at least one of a nylon, poly(cyclohexanedimethanol terephthalate), poly (ethylene naphthalate), poly(4-methyl 1-pentene), poly(phenylene sulfide), polyoxymethylene or polysulfone,
wherein at least one of the first or second polymer has an elastic modulus of less than 3 x 10⁵ N/m² at 1 Hz at at least 50 °C,
wherein the fiber has a length in the range of from 2 to 10 millimeters, and an average diameter up to 100 micrometers,
wherein the fiber is non-fusing up to at least 110 °C; and
wherein the softening temperature is determined as described in the Softening Temperature Test as given in the description, and the non-fusing nature of the fiber is determined according the Non-fusing Fiber Test as given in the description.

2. The multi-component fiber according to claim 1, wherein the second polymer has an elastic modulus that is higher than the elastic modulus of the first polymer.

3. The multi-component fiber according to any of claims 1 to 2, wherein at least one of the first or second polymer is crosslinked.

4. The multi-component fiber according to any of claims 1 to 3 further comprising a third polymer having a softening temperature up to 150°C.

## Patentansprüche

1. Mehrkomponentenfaser, zumindest erste und zweite Polymere umfassend, wobei das erste Polymer eine Erweichungstemperatur von bis zu 150 °C aufweist,
wobei das zweite Polymer einen Schmelzpunkt von mindestens 130 °C aufweist,
wobei der Unterschied zwischen dem Erweichungspunkt des ersten Polymers und dem Schmelzpunkt des zweiten Polymers mindestens 10 °C beträgt,
wobei das erste Polymer mindestens eines ist von Ethylen(meth)acryl-säure-Copolymer, Ethylen(meth)acrylsäure-lonomer, Polyamid, Polyvinylidenfluorid, vernetztem Polyethylen, vernetztem Polypropylen, feuchtigkeitsgehärtetem Polyurethan, Epoxiden, vernetzten Acrylaten, vernetztem Silikon oder thermoplastischem Polyurethan,
wobei das zweite Polymer mindestens eines ist von Nylon, Poly(cyclohexandimethanolterephthalat), Poly(ethylennaphthalat), Poly(4-methyl-1-penten), Poly(phenylensulfid), Polyoxymethylen oder Polysulfon,
wobei mindestens eines von dem ersten oder dem zweiten Polymer bei 1 Hz bei mindestens 50 °C einen Elastizitätsmodul von weniger als 3 x 10⁵ N/m² aufweist,
wobei die Faser eine Länge im Bereich von 2 bis 10 Millimetern und einen durchschnittlichen Durchmesser von bis zu 100 Mikrometern aufweist,
wobei die Faser bis mindestens 110 °C nicht schmilzt; und
wobei die Erweichungstemperatur wie in dem in der Beschreibung angeführten Erweichungstemperaturtest beschrieben bestimmt wird, und die Schmelzbeständigkeit der Faser gemäß dem in der Beschreibung angeführten Schmelzbeständigkeits-Fasertest bestimmt wird.

2. Mehrkomponentenfaser nach Anspruch 1, wobei das zweite Polymer einen Elastizitätsmodul aufweist, der höher ist als der Elastizitätsmodul des ersten Polymers.

3. Mehrkomponentenfaser nach einem der Ansprüche 1 bis 2, wobei das erste und/oder das zweite Polymer vernetzt ist bzw. sind.

4. Mehrkomponentenfaser nach einem der Ansprüche 1 bis 3, ferner ein drittes Polymer umfassend, das eine Erweichungstemperatur von bis zu 150 °C aufweist.

## Revendications

1. Fibre à multicomposants comprenant au moins des premier et deuxième polymères, dans laquelle le premier polymère a une température de ramollissement allant jusqu'à 150 °C,
dans laquelle le deuxième polymère a un point de fusion d'au moins 130 °C,
dans laquelle la différence entre le point de ramollissement du premier polymère et le point de fusion du deuxième polymère est d'au moins 10 °C,
dans laquelle le premier polymère est au moins un polymère parmi un copolymère éthylène-acide (méth)acrylique, un ionomère éthylène-acide (méth)acrylique, du polyamide, du fluorure de polyvinylidène, du polyéthylène réticulé, du polypropylène réticulé, du polyuréthane durci à l'humidité, des époxys, des acrylates réticulés, de la silicone réticulée ou du polyuréthane thermoplastique,
dans laquelle le deuxième polymère est au moins un parmi un nylon, du poly(téréphtalate de cyclohexanediméthanol), du poly (naphtalate d'éthylène), du poly(4-méthyl 1-pentène), du poly(sulfure de phénylène), du polyoxyméthylène ou une polysulfone,
dans laquelle au moins l'un parmi le premier ou le deuxième polymère a un module élastique inférieur à 3 x 10⁵ N/m² à 1 Hz à au moins 50 °C,
dans laquelle la fibre a une longueur dans la plage allant de 2 à 10 millimètres et un diamètre moyen allant jusqu'à 100 micromètres,
dans laquelle la fibre est non fusible jusqu'à au moins 110 °C ; et
dans laquelle la température de ramollissement est déterminée comme décrit dans l'Essai de température de ramollissement tel que donné dans la description et la nature non fusible de la fibre est déterminée selon l'Essai de fibre non fusible tel que donné dans la description.

2. Fibre à multicomposants selon la revendication 1, dans laquelle le deuxième polymère a un module élastique qui est plus élevé que le module élastique du premier polymère.

3. Fibre à multicomposants selon l'une quelconque des revendications 1 à 2, dans laquelle au moins l'un parmi le premier ou le deuxième polymère est réticulé.

4. Fibre à multicomposants selon l'une quelconque des revendications 1 à 3, comprenant en outre un troisième polymère possédant une température de ramollissement allant jusqu'à 150 °C.
